# EUROPEAN PATENT APPLICATION

(11) **EP 1 388 286 A1**
(43) Date of publication of application: **11.02.2004**
(21) Application number: 03017511.1
(22) Date of filing: 05.08.2003
(51) Int. Cl.: A21C 9/04

(54) **Method for the garnishing of pizzas and its production line**

(30) Priority: 09.08.2002 IT VI20020181
(71) Applicant: ALIMEC S.R.L., 36015 Schio (VI) (IT)
(72) Inventor: Roso, Urbano, 36015 Schio (VI) (IT)
(74) Representative: Bonini, Ercole

(57) **Abstract**

A method for the garnishing of pizzas (2) is disclosed, consisting of a raw or partially cooked dough base (2a) whereon one or more toppings (3a, 3b) are placed, comprising a laying down operation (4) of the dough bases (2a) on one conveying surface; laying down operations (7, 8) of the ingredients (3a, 3b) on the dough bases (2a). The method comprises a weighing operation (8, 13) of the dough bases (2a) with the ingredients (3a, 3b) placed on them which is carried out after each of the laying down operations (7, 12) in order to determine the weight of the laid down ingredients (3a, 3b) as a difference between the weights detected before and after each of the laying down operations (7, 12).

## Description

The present invention is about a method for the garnishing of pizzas, as well as its production line, particularly suitable for being employed in the food industry.

It is well known that the preparation of pizzas at the industrial level comprises a number of operations made on an automatic line consisting of a conveyor belt, which slides at a constant speed, and of several trailer-mounted modular units connected to it and controlled by a central processing unit, usually a PLC.

After the initial operations of kneading, leavening, and flattening, one or more garnishing operations follow, consisting of the subsequent laying down of the toppings, such as for example cheese, cold cuts, or mushrooms on the raw or pre-cooked dough base which travels on the conveyor belt.

Before being laid down on the dough base, the garnishing ingredients are loaded into modular units known as dispensers and made according to different kinds.

The state of the art dispensers comprise, among other elements, two components such as a sliding mat, whereon the toppings are placed, and four racking combs, connected overhanging to the dispenser's frame and that move with a rotatory-translatory motion in the opposite direction to the sliding mat in order to reduce the thickness of the ingredients.

According to a preferred embodiment, such dispensers provide for a fall by gravity, also known as "rainfall", of the toppings on the dough base, with the inconvenience of having to get back those ingredients which fall on the conveyor belt during the garnishing operations.

In order to remedy such inconveniences some hopper shaped conveying cups are assembled, which converge the distribution of the ingredients on the dough bases.

These systems of distribution, however, do not provide for any weighing operation of the ingredients, whose weight is determined by adjusting some parameters of the dispenser, such as the speed of the sliding mat and the height of the racking combs from the same sliding mat which establish the thickness of the forthcoming ingredients.

Furthermore, it is important to notice that the used ingredients for the garnishing of pizzas absorb humidity from the environment during the garnishing process, modifying their weight, so as the obtained pizzas have in many cases a different weight from the expected one and from that indicated in the recipe.

In order to try solving such inconveniences some dispensers have been made wherein the ingredients pass from the sliding mat into small hoppers, placed between the conveyor belt, next to which some loading cells are arranged for the weighing of the ingredients, before those are placed on the dough base.

The hoppers have a diaphragm at their bottom which is opened when the dough bases pass by underneath the dispenser, in order to pour the toppings on them.

However, this kind of dispensers as well makes a garnishing system for pizzas which is not efficient.

The problem consists in that, after some garnishing cycles, the weight of the ingredients which are laid down on the dough base is smaller than the expected one, because the especially fatty and greasy ingredients for pizzas get stuck on the hoppers' walls.

Another inconvenience, therefore, consists in that continuos cleaning operations of the plant in order to restore the initial working conditions are needed.

The present invention aims at solving the previously mentioned inconveniences.

More specifically, it is a first object that of making a method for the garnishing of pizzas which allows to know exactly the weight of the ingredients that are laid down at every garnishing phase.

It is a second object of the invention that of obtaining a finished product that would fit with greater precision, compared to the state of the art technique, the weighing standards guaranteed to the customer.

It is a last but not least object of the invention that of decreasing the inefficiency of the garnishing process of the pizzas, by specifically reducing the cleaning operations of the plant.

Said objects along with others that will be better explained later on are achieved by providing a method for the garnishing of pizzas, consisting of a raw or partially cooked dough base whereon one or more toppings are placed, which, in line with the main claim, comprises:
- a laying down operation of at least one of said dough bases on at least one conveying surface;
- one or more laying down operations of said ingredients on said dough bases
and is characterized in comprising a weighing operation of said dough bases with said ingredients placed on them which is carried out after each of said laying down operations in order to determine the weight of said laid down ingredients as a difference between the weights detected before and after each of said laying down operations.

Advantageously, the method of the invention allows achieving a constant check of the weight of the dough bases with the toppings placed on them.

Yet advantageously, the method permits verifying the correspondence between the detected weight of the ingredients and the preset weight, in order to allow intervening in real time with corrective actions, managed in an automatic manner, during the garnishing process.

Yet more advantageously, the method allows the adjustment of the weight of the ingredients to be laid down before and after the just carried out weighing operation, in the case that garnishing operations of several different toppings should be carried out.

Said advantages and objects will be better highlighted in an explanatory but not limiting way during the description of a preferred embodiment of the invention with reference to the annexed drawings, wherein:
- Figure 1 shows with a longitudinal section the line along which the garnishing process takes place;
- Figure 2 is a plan view of the line of figure 1.

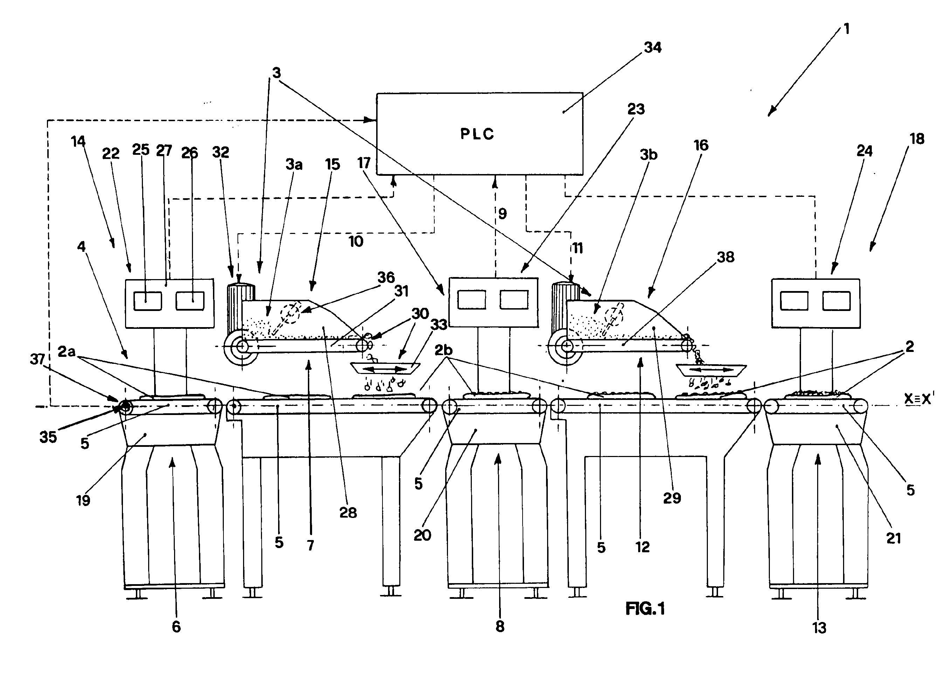

The automatic line, generally indicated with 1, is shown in figure 1 with a longitudinal section, which carries out the garnishing method of the invention and wherein the constitutive devices are shown in a simplified diagrammatic form.

Furthermore, it must be noticed that, according to the previously described embodiment, the method of the invention provides for only two operations for laying down the garnishing ingredients, being understood that in other applications such number could be greater or lower as a function of the kind of garnishing.

The method for garnishing pizzas, generally indicated with 2 and each pizza consisting of a supposedly raw dough base 2a, whereon several ingredients 3 are placed, initially comprises a laying down operation 4 of the raw dough bases 2a, on a pair of conveying surfaces 5, which move forward according to two mutually parallel corresponding directions X and X'.

It must be immediately noticed that, according to an embodiment of the invented method, initially the dough bases placed on the conveying surfaces could be partially cooked.

It is obvious that, according to a further embodiment of the invented method, the dough bases placed on the conveying surfaces could be lined up according to a sole direction or according to more than two directions, as a function of the desired productive volumes, being able to correspondingly vary the number of conveying surfaces as well.

In the embodiment described hereafter, furthermore, preferably but not necessarily the conveying surfaces 5 are each made of a conveyor belt.

According to a preferred embodiment of the invented method described hereafter, the raw dough base 2a undergo an initial weighing operation 6 before being subjected to the laying down operation 7, wherein the ingredients 3a are laid down, such as cheese for example.

In the case that the weight of the either raw or partially cooked dough bases, were to be already precisely known before starting the whole garnishing process, it is clear that it will not be necessary to carry out the initial weighing operation.

After the first laying down operation 7, the obtained dough bases 2b are subjected to a new weighing operation 8.

In such manner, the weight of the laid down ingredients 3a is determined as a difference between the weights detected before and after the laying down operation 7 and, at the same time, a comparative operation 9 is carried out between the detected weight and the standard weight in order to establish the potential weight discrepancy of the laid down ingredients 3a from their preset weight.

If the weight difference of the ingredients 3a is positive, that is if the detected weight is greater than the standard weight, a first corrective operation 10 is carried out, consisting of a weight reduction of the ingredients 3a to be laid down in the following laying down operation 7 on the raw dough bases 2a, carried out before the weighing operation 8.

The method of the invention also allows carrying out a second corrective operation 11, after the weighing operation 8, of the detected weight difference consisting of, in this case as well, a weight reduction of the ingredients 3b, such as vegetables for example, to be laid down in the following laying down operation 12 on the dough bases 2b already garnished with cheese.

In this manner, while the raw dough bases 2a will take place a new laying down operation 7 more precise than the previous one, on the dough bases 2b a laying down operation 12 of other ingredients 3b will occur, in a smaller amount compared to the preset one, in order to compensate for the weight increase occurred in the previous laying down operation 7.

Everything can be verified in the weighing operation 13, carried out after the laying down operation 12, that, according to the previously described embodiment, is the final weighing operation of the obtained pizzas 2.

It is clear that, if during said comparison operation 9 a negative weight difference of the ingredients laid down in the course of the first laying down operation 7 were to be determined, the corrective operations would be consisted of a weight increase of the ingredients 3a to be added in the following laying down operation 7, carried out before the weighing operation 8, and of a weight increase of the ingredients 3b to be added in the following laying down operation 12, carried out after the weighing operation 8.

The weighing operation 8 of the first of the dough bases 2b, which detects the potential weight difference, takes place after that a very limited number of raw dough bases 2a has been subjected to the laying down operation 7.

Such number can however be advantageously reduced by carrying out the weighing operation 8 as close as possible to the laying down operation 7, taking always into consideration the possibility of carrying out the potential corrective operation 11 in the subsequent laying down station 12.

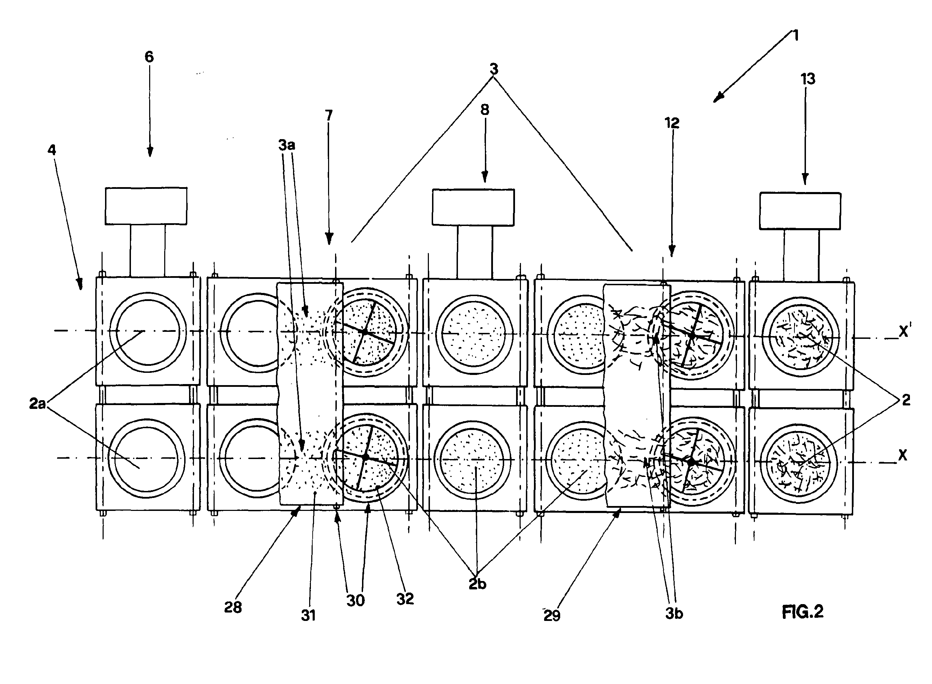

The line 1 for the garnishing of pizzas 2 which carries out the previously described method is shown in figures 1 and 2 and comprises two conveying surfaces 5 that define the longitudinal directions X and X' respectively of the supposedly raw dough bases 2a, according to the described embodiment.

A loading station 14 of the raw dough bases 2a on the corresponding respective conveying surface 5 and two laying down stations 15 and 16 of the ingredients 3a and 3b respectively are indicated, in sequence, along each of the forward longitudinal directions X and X'.

According to the invention, the line 1 comprises two weighing stations, indicated with 17 and 18 respectively, of the dough bases 2b with the ingredients 3a and of the pizzas 2 with the ingredients 3a and 3b placed on them, arranged one after the laying down station of each of the laying down stations 15 and before the laying down station 16, and the other after the laying down station 16.

According to the preferred embodiment of the here described invention, the line 1 also comprises an initial weighing station of the raw dough base 2a in proximity of the loading station 14 and before the first laying down station 15.

It is obvious that, according to other embodiments, the line could consist of a number of different laying down stations, by correspondingly varying the number of weighing stations as well.

The weighing stations 14, 17 and 18 and the laying down stations 15 and 16, because they are trailer-mounted, are mutually separated and each of them are equipped with its own conveying surface 5, consisting preferably but not necessarily of a conveyor belt, mechanically connected to the next one.

Furthermore, the weighing stations 14, 17 and 18 consist of a corresponding scale with loading cells 19, 20 and 21 whereon the conveying surface 5 is placed, each equipped with corresponding displaying means 22, 23 and 24 of the detected weight.

Preferably but not necessarily, the displaying means, specifically those indicated with 22, consist of two digital screens 25 and 26 placed on an electrical panel 27.

Regarding the laying down stations 15 and 16, each of them consists of a dispenser 28 and 29 for the falling garnishing of the raw dough bases 2a and of the dough bases 2b respectively.

More specifically, the laying down station 15 comprises conveying means, generally indicated with 30, which adjust the laying down by gravity of the ingredients 3a on the raw dough bases 2a.

The conveying means 30 comprise a conveying mat 31, of the dispenser 28 and is suitable for moving forward the ingredients 3a loaded into the latter, which is connected to first driving means that, generally indicated with 32 and consisting of a direct current gear motor, put it into a horizontal motion.

The conveying means 30 comprise, furthermore, a conveying cup 33, placed immediately underneath the conveying mat 31 and above the conveying surface 5, for receiving the ingredients 3a which come from the conveying mat and for dispensing them on the raw dough bases 2a.

The conveying cup 33, that according to the described preferred embodiment has a slightly funnel-shaped form but that in other embodiments could have different shapes, is also connected to second driving means that, not shown in the following figures, and them too consisting of a direct current motor, put them into motion in the same forward direction of the lower conveying surface 5.

As shown in figure 1, the line 1 is electronically controlled by a central processing, command and control unit 34, preferably but not necessarily comprising a PLC as well.

More particularly, the central unit 34 is operatively connected to detecting means, of the encoder type, generally indicated with 35 and connected to the driving shaft 37 of the conveying surface 5, which determine the position relative to the raw dough bases 2a placed on the same conveying surface 5, compared to the conveying cup 33.

Furthermore, the central unit 34 is operatively connected to the motors of both of said driving means in order to adjust their operative parameters and, therefore, it turns out to be connected with the laying down station 15 of the ingredients 3a.

At last, the central unit 34 is operatively connected also with the weighing stations 14 and 17, placed before and after the laying down station 15 respectively.

Operatively, the weight of the raw dough bases 2a, detected at the weighing and loading station 14, is subsequently transmitted to the central unit 34 which stores it.

The raw dough bases 2a then move towards the laying down station 15 of the ingredients 3a.

As soon as the detecting means 35 report to the central unit 34 that the first two raw dough bases 2a are underneath the corresponding conveying cups 33, the second driving means make the cups move forward in the same path, in the same direction and with the same advancing speed of the conveying surface 5.

Therefore the conveying cup 33 and the raw dough bases 2a jointly advance for a laying down time t_{d} during which the ingredients 3a fall by gravity from the conveying mat 31 into the conveying cups 33 which lay them down homogeneously on the lower raw dough bases 2a.

Once the first operation is carried out, the second driving means reverse the motion of the conveying cups 33 by moving them into the direction opposite to the forward one of the conveying surface 5 up to the initial position.

The previously described cycle is thus duplicated also for the other raw dough bases 2a which are moving towards the laying down station 15.

The first two dough bases 2b with the ingredients 3a placed on them arrived in the meanwhile to the weighing station 17 where they get weighed.

The detected weight is subsequently transmitted to the central unit 34 wherein is compared to the standard weight in order to determine the potential difference.

If a weight difference is actually found, the central unit 34 immediately corrects the operative parameters of the dispenser 28, such as the advancing speed of the conveying mat 35, and even, in some particular embodiments, the height of the racking combs 36, shown in a simplified manner in figure 1.

Either a decrease or a raise of the speed of the conveying mat 31 and thus either a reduction or an increase of the ingredients 3a to be laid down in the subsequent raw dough bases 2a would correspond respectively to a detected weight greater or smaller than the standard weight.

Yet again, the central unit 34 will communicate with the dispenser 29 located after the weighing station 17, in order to correct the dough bases 2b, garnished with the ingredients 3a, whereon the weight difference is detected.

In this case as well, either a decrease or a raise of the speed of the conveying mat 38 and thus either a reduction or an increase of the amount of the ingredients 3b to be laid down in the dough bases 2a wherein the mistake has been found would correspond respectively to a detected weight greater or smaller than the standard weight.

The just described process is repeated for any number of laying down stations, according to the kind of garnishing requested, being understood that the check of the weight detected at the last weighing station, indicated with 18 in the embodiment here described, allows carrying out the sole correction of the amount of ingredients to be laid down before the same weighing station.

It is obvious that, as soon as the setting of the operative parameters of any laying down station allows achieving a detected weight matching the standard weight, the previously described corrective system will not be operative.

The object of knowing, after each garnishing operation, the exact weight of the dough bases with the ingredients placed on them as well as the weight of the same ingredients which have just been laid down has thus been accomplished. Furthermore, the continuous check of the laying down operations allows intervening in real time through corrective actions, automatically preset by a central processing unit, thus avoiding that the potential weight error is not able from one hand to be compensated, and on the other hand to be duplicated.

This brings considerable advantages, not least that of guaranteeing a finished product to the client, which is really consistent with what had been requested.

It is thus clear that the previously described method of the invention allows increasing the efficiency of the line of production, because the potential weight difference is immediately corrected, without having to wait for the end of the garnishing cycle and without having to carry out cleaning operations of the line in order to restore the optimal working conditions.

Based on what has been previously said, it is thus understood that the method of the invention and the line which carries it out achieve all of the previously mentioned advantages and objects.

It is obvious that, according to other embodiments, the weighing stations can be made of scaling devices different from those described in the present patent.

In addition, it must be noticed that the line for the garnishing of pizzas which the method of the invention carries out can be perfectly integrated with the apparatuses located upstream and downstream.

All of the previously mentioned embodiment together with those not mentioned, as well as those not shown in the subsequent figures, should be considered protected by the present patent whenever they fall within the scope of the following claims.

## Claims

1. A method for the garnishing of pizzas (2), consisting of a raw or partially cooked dough base (2a) whereon one or more toppings (3a, 3b) are placed, which comprises:
- a laying down operation (4) of at least one of said dough bases (2a) on at least one conveying surface;
- one or more laying down operations (7, 8) of said ingredients (3a, 3b) on said dough bases (2a, 2b),
**characterized in** comprising a weighing operation (8, 13) of said dough bases (2b) with said ingredients (3a, 3b) placed on them which is carried out after each of said laying down operations (7, 12) in order to determine the weight of said laid down ingredients (3a, 3b) as a difference between the weights detected before and after each of said laying down operations (7, 12).

2. The method according to claim 1), **characterized by** comprising also an initial weighing operation (6) of said dough bases (2a) for determining the weight of said ingredients (3a) laid down during the first of said laying down operations (7) as difference between the detected weights before and after of said first laying down operation (7).

3. The method according to claim 2), **characterized by** comprising a comparative operation (9) between the detected weight after each of said laying down operation (7, 12) and the corresponding standard weight in order to determine the weight difference of said laid down ingredients (3a, 3b) from their preset weight.

4. The method according to claim 3), **characterized by** comprising a corrective operation (10, 11) of said difference which is carried out by varying the weight of the ingredients (3a, 3b) to be laid down in the subsequent laying down operations (7, 12) before and after of said weighing operation (8, 13).

5. The method according to claim 4), **characterized in that** said corrective operation is incremental if said difference were to be negative.

6. The method according to claim 4), **characterized in that** said corrective operation (10, 11) is decremental if said difference were to be positive.

7. The line (1 ) for the garnishing of pizzas (2), consisting of a raw or partially cooked dough base (2a) whereon one or more ingredients (3a, 3b) are placed, comprising at least a conveying surface (5) which defines a forward longitudinal direction (X, X') of said dough bases (2a, 2b) along which are individuated in sequence:
- at least one loading station (14) of said raw dough bases (2a) on said at least one conveying surface (5);
- one or more laying down stations (8, 12) of said ingredients (3a, 3b) on said dough bases (2a, 2b),
**characterized by** comprising one or more weighing stations (17, 18) of said dough bases (2b) with said ingredients (3a, 3b) placed on them, located upstream and downstream of each of said laying down stations (15, 16).

8. A line (1) according to claim 7), **characterized by** comprising an initial weighing station of said dough base (2a) in proximity of said loading station (14) and before the first of said laying down stations (15, 16).

9. The line (1 ) according to claim 8), **characterized in that** said laying down stations (15, 16) comprise conveying means (30) fit to lay down by gravity said ingredients (3a, 3b) on said dough bases (2a, 2b).

10. The line (1 ) according to claim 9), **characterized in that** said conveying means (30) comprise a conveying mat (31 ) for the moving forward of said ingredients (3a, 3b), connected to first driving means (32) suitable for putting it into motion, and a conveying cup (33), placed immediately underneath said conveying mat (31 ) for receiving said ingredients (3a, 3b) coming from said conveying mat (31 ) and for dispensing them on the raw dough bases (2a).

11. The line (1 ) according to claim 10), **characterized in that** said conveying cup (33) is connected to second driving means fit to putting it into motion in the same forward direction (X, X') of said conveying surface (5).

12. The line (1 ) according to claim 11), **characterized in that** said driving means (32) comprise motors which are operatively connected to a central processing, command and control unit (34).

13. The line (1 ) according to claim 12), **characterized in that** said central unit (34) is operatively connected to detecting means (35) associated to said conveying surface (5) in order to determine the relative position of each of said dough bases (2a, 2b) with respect to said conveying cup (33).

14. The line (1 ) according to claim 13), **characterized in that** said second driving means move said conveying cup (33) into the same path (X, X'), in the same direction and with the same advancing speed of the conveying surface (5) during the laying down time (t_{d}) of said ingredients (3a, 3b) on said dough bases (2a, 2b), when said detecting means (35) report to said central unit (34) that said dough bases (2a, 2b) are completely underneath said conveying cup (33).

15. The line (1 ) according to claim 13), **characterized in that** said second driving means move said conveying cup (33) into the direction opposite to that of said conveying surface (5) up to the initial position after the laying down of said ingredients (3a, 3b).

16. The line (1 ) according to claim 13), **characterized in that** said central unit (34) is operatively connected to said weighing stations (14, 17, 18) in order to determine the difference between the detected weight and the standard weight of said ingredients (3a, 3b).

17. The line (1 ) according to claim 16), **characterized in that** said central unit (34) corrects said weight difference by adjusting the speed of said first driving means (32) connected to said conveying mat (31 ).

18. The line (1 ) according to claim 17), **characterized in that** said central unit (34) also comprises a PLC.

19. The line (1 ) according to claim 7), **characterized in that** said laying down stations (15, 16) and said weighing stations (14, 17, 18) are trailers-mounted.

20. The line (1 ) according to claim 7), **characterized in that** each of said weighing stations (14, 17, 18) consists of a scale with loading cells (19, 20, 21 ) whereon the conveying surface (5) is placed.

21. The line (1 ) according to claim 7), **characterized in that** each of said weighing stations (14, 17, 18) is equipped with displaying means (22, 23, 24) of the detected weight.

22. The line (1 ) according to claim 21), **characterized in that** said displaying means (22, 23, 24) consist of one or more digital screens (25, 26) placed on an electrical display (27).

23. The line (1 ) according to claim 20), **characterized in that** said conveying surface (5) consists of a conveyor belt.

24. The line (1 ) according to claim 7), **characterized in that** each of said laying down stations (15, 16) consist of a dispenser (28, 29) for the falling garnishing of said dough bases (2a, 2b).
